# EUROPEAN PATENT SPECIFICATION

(11) **EP 0 547 218 B1**
(45) Date of publication and mention of the grant of the patent: **03.09.1997**
(21) Application number: 92916372.3
(22) Date of filing: 22.06.1992
(51) Int. Cl.: G11B 7/00, G11B 7/007, G11B 20/00, G11B 20/12, G11B 27/30

(54) **AUDIO RECORD CARRIER AND PLAYERS FOR PLAYING SAID RECORD CARRIER**
Audiospeichermedium und Wiedergabegerät zur Wiedergabe eines Speichermediums
Support d' enregistrement de son et lecteurs associés

(30) Priority: 05.07.1991 EP 91111228
(43) Date of publication of application: 23.06.1993
(73) Proprietor: Philips Electronics N.V., 5621 BA Eindhoven (NL)
(72) Inventor: BLÜTHGEN, Björn, D-3100 Celle (DE); SCHYLANDER, Erik, Christian, NL-5506 CA Veldhoven (NL)
(74) Representative: Groenendaal, Antonius Wilhelmus Maria
(86) International application number: PCT/NL92/00108
(87) International publication number: WO 93/01593

(56) References cited:
- EP-A- 0 277 019
- EP-A- 0 339 929
- EP-A- 0 453 108
- EP-A- 0 465 246
- US-A- 4 992 885
- Patent Abstracts of Japan, Vol 13, No 219, P875, abstract of JP 01- 33728, publ 1989-02-03
- Patent Abstracts of Japan, Vol 13, No 239, P879, abstract of JP 01- 42028, publ 1989-02-14
- "Compact Disc Interactive - A designer's overview" ISBN 9020121219; pages 52,109"

## Description

The invention relates to a record carrier on which addressable information has been recorded, which information comprises at least one audio track, said audio track comprising a prepart and an audio part, said prepart comprising pause information which when reproduced results in a reproduction of silence, which prepart is located directly before the audio part, said audio part comprising audio information which when reproduced results in the reproduction of audio, on which record carrier a table of contents has been recorded, which table includes address information indicating the start location of the audio part of said audio track, said information comprising additional non-audio information, which is a different type of information than the pause information.

Further the invention relates to players specified in claims 8 to 10 for playing said record carrier.

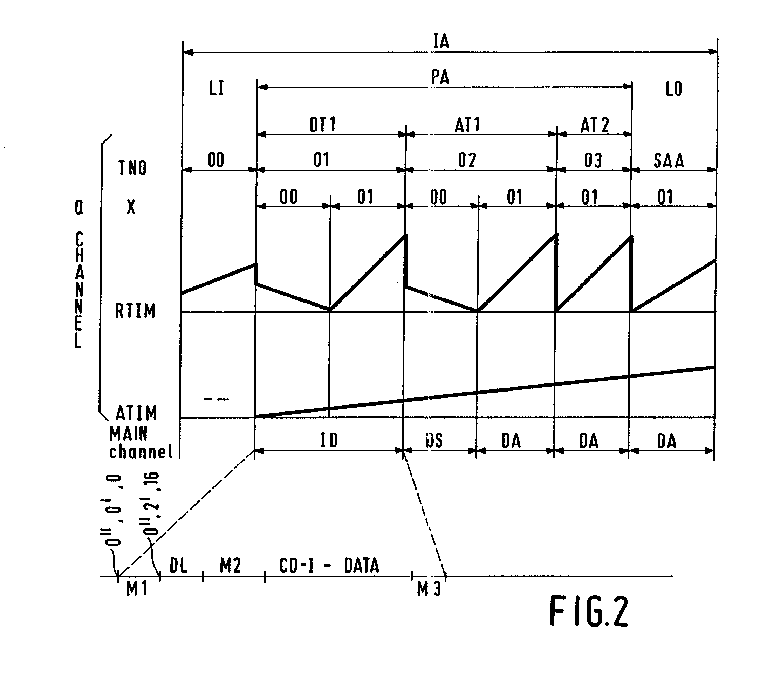

A type of a record carrier as defined above, the so-called CD-I disc, and such players are known inter alia from the book "Compact Disc Interactive - A designer's overview", ISBN 90 201 2121 9 (see in particular pages 52 and 109). The content of these pages which is shown in Figur 2 of the present application serves as a basis for the preamble of claim 1. The additional information may be information which enables an interactive access of the audio information recorded on the record carrier. However this information may also be other information such as text or image information to be displayed during the reproduction of the audio information. The CD-I format makes it possible to record both a track with additional information (CD-I information) and an audio track with a format which corresponds with the format of the audio tracks as prescribed in the CD-audio standard. When the additional information is recorded in the main channel of a CD-audio disc it is to be prevented that this additional information is reproduced as audio information, because this results in the production of noise. In some type of the CD-audio player presently in use this prevention is realized by checking whether the disc is a CD-audio disc and inhibiting the playback of the disc when the disc is not a CD-audio disc.

Another disadvantage of the CD-I disc as prescribed by the present version of the CD-I standard is that the first track must be a CD-I track. This means that a CD-audio track on a CD-I disc cannot be indicated with track number "1". This may result in confusion for the ordinary user, because he will expect the track with track number "1" as the first (audio) program track on the disc.

It is an object of the invention to provide a record carrier on which audio information and additional information has been recorded such that the record carrier can be played with a dedicated player which uses the additional information for the control of the reproduction and which also can be played by means of audio players without resulting in an undesired production of noise caused by the read-out of the additional information.

According to the invention this object is achieved by a record carrier as defined in the opening paragraph and which is characterized in that said prepart includes the additional information located before the pause information.

The record carrier according to the invention does not contravene the requirements as prescribed in the CD-audio standard. So a CD-audio player will be able to play a CD-disc with the characteristics of the record carrier according to the invention. Further for such disc it is allowed to indicate a track with audio information as track "1".

In the present invention advantageous use is made of the fact that in an audio player for playing a record as defined in the openings paragraph usually a track jump is made to a part of the audio track just before the beginning of the audio part. The part just before this audio part comprises pause information, so that a silence is reproduced until the audio part is reached. Due to this track jump the part with the additional information is skipped.

Preferably the additional information is included in the prepart of the first audio track of the sequence of audio tracks recorded on the disc. However in principle it is also possible to include additional information in the prepart of the other tracks.

A known feature of the present CD-audio players is the so-called "Reverse Scan". When using this feature in combination with a record carrier according to the invention an user may pass the start location of the first track. In order to reduce the chance that this would result in a production of noise caused by the playback of the additional information it is preferred that the length of the part with pause information is substantial longer than the minimum length as prescribed by the CD-audio standard, which minimum length corresponds with two seconds of playing time. A length of the part with pause information corresponds with at least thirty seconds of playing time is suitable. However a length which substantially corresponds with at least hundred and twenty seconds is recommended.

The reproduction of undesired noise can also be prevented by means of an audio player for playing a record carrier according to the invention, which player is provided with a read unit for reading information from the record carrier, with a search unit for performing track jumps under control of a control unit, with means for supplying an audio signal representing the information read out to an audio signal output of the player, characterized in that the player is provided with means for muting the audio signal in the event that the additional information is read or in that the control unit is arranged for inhibiting track jumps to an area of the record carrier comprising the additional information.

The invention is in particular suitable to provide a CD-disc with both audio information and CD-I data. A CD-disc according to the invention can be played by both an usual CD-audio-player and a CD-I player. However it is to be noted that the invention is not limited to the use in CD-discs. In principle the invention can be used in every record carrier of a type in which the audio part is preceded by a pause part and in which the start location of the audio part is indicated on the record carrier. Access to the additional information can be easily obtained by a player which is provided with a read unit for reading information from the record carrier, a search unit for performing track jumps under control of a control unit, which is arranged to cause a read out of the table of contents prior to the start of the playing of the audio tracks, to select on the basis of the table of contents a part of the information to be read by said reading means and to cause that the search unit performs a track jump to the selected part of the information, characterized in that the control unit is arranged to detect on the basis of the information in the table of contents whether a prepart of an audio track exceeds a predetermined length and means for initiating a search to the additional information in the prepart in the event that the length of said prepart exceeds said predetermined length.

The invention will be explained hereinafter in detail with reference to the drawings, in which
figure 1 shows the lay-out of prior art CD-audio disc,
figure 2 shows the lay-out of a prior art CD-I disc,
figure 3 shows the lay-out of a CD disc according to the invention,
figure 4 shows an embodiment of a player according to the invention,
figure 5 shows a flow diagram of a program of a program controlled control unit used in the player of figure 4, and
figure 6 shows an embodiment of an audio player according to the invention.

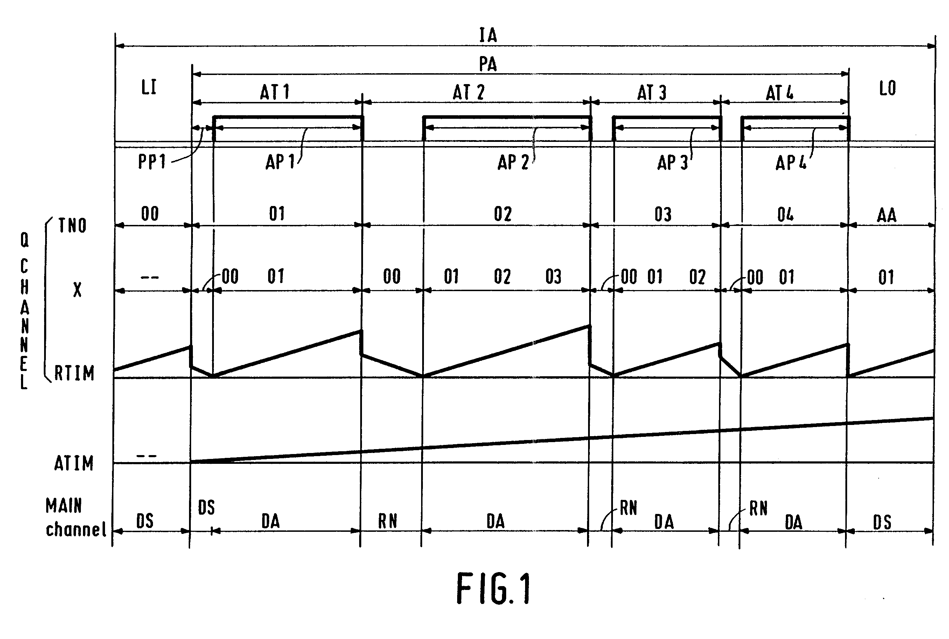

Figure 1 shows the lay-out of a typical CD-audio disc. The area of the disc in which information has been recorded is indicated as the information area IA. The information area IA is divided into a lead-in area LI, a programm area PA and a lead-out area LO. The program area PA comprises four audio tracks indicated by AT1, AT2, AT3 and AT4. Each audio track comprises an audio part in which audio information has been recorded. The audio parts in figure 1 are indicated as AP1,..AP4. The CD-audio standard prescribes that the audio track AT1 comprises a prepart PP1 that directly precedes the audio part AT1. In the prepart PP1 information is recorded which results in a reproduction of silence when played. This information will be mentioned digital silence hereinafter. The audio information and the digital silence in the audio tracks are included in the so-called main channel. In figure 1 the part of the main channel provided with digital silence has been indicated with DS.. The audio parts of tracks AT1,..,AT4 may be separated by digital silence or so called room noise. With the term room noise a digitized analog silence signal is meant. The parts with room noise are indicated with RN. The parts provided with audio information are indicated with DA. In the lead-in area LI and the lead-out area LO the main channel has been provided with digital silence. In a so-called subcode Q channel control information is included. In the program area the subcode Q channel includes address information in the form of an absolute time code ATIM indicating the playing time expired from the beginning of the program area PA. The value of the absolute time code as a function of the position within the program area is also shown in figure 1. Further in the programm area the subcode Q channel includes a track number code TNO, an index code X and a relative time code RTIM. In the prepart of the audio tracks the index code X has the value 00. The audio part of the audio track starts with the index value 01. The values of TNO, X and RTIM are shown in figure 1. In the lead-in area LI the subcode Q channel comprises a table of contents TOC, which has a format as prescribed by the CD-audio standard. Such table of contents TOC comprises the absolute time codes ATIM indicating the start location of the audio parts AP1,...,AP4 of the tracks. Further this table of contents TOC includes an indication that the disc is a CD-audio disc.

When a CD-audio disc is played by an usual CD-player, the CD-player firstly read the table of contents TOC. Then the player detects on the basis of the contents of TOC whether the disc is a CD-audio disc. In some types of CD-audio players the playback of the programm area PA is inhibited, in the event that it is detected that the disc loaded in the player is no CD-audio disc. However, if the presence of a CD-audio disc is detected then a track jump to a part close before the start location of the audio part of the first audio track or an user selected audio track is performed. In doing so the information included in the table of contents is used to determine the destination of the track jump. After the track jump the scanning spot lands close before the start location of the audio part of the desired audio track. Since pause information has been recorded on the landing location of the scanning spot silence or room noise will be reproduced for a short time until the scanning spot reaches the staring location of the audio information.

Figure 2 shows the lay-out of a typical CD-I disc. A CD-I disc has an information area IA which is divided in the same manner into a lead-in area LI, a program area and a lead-out area LO. As prescribed by the CD-I standard the first track in the program area is always a CD-I track, indicated by DT1 in figure 2. This CD-I track comprises a message area M1 which corresponds to the data sectors with header addresses 0",0',0 to 0",0',16. A so-called disc label DL starts with the sector header with address 0",2',16. The disc label DL is followed by a message area M2. The message area M2 is followed by a part with CD-I data. The CD-I track may be followed by one or more audio tracks (AT1,AT2) with a format as prescribed by the CD-audio standard. A so-called message area M3 follows the CD-I data within the section DT1 in the event that AT1 comprises Pulse Code Modulated audio information. The values of TNO, X , RTIM and ATIM included in the subcode Q channel are shown in figure 2. The lead-in area LI includes a table of contents TOC which has a format as prescribed in the CD-I standard. Such table of contents TOC includes an indication that the disc is a CD-I disc. Further this table of contents includes the start locations of the audio part of the audio tracks. The addresses of the CD-I tracks are not included in the table of contents. When such CD-I disc is loaded into an usual CD-audio player the player will detect on the basis of the table of contents TOC that the disc loaded is a CD-I disc. In response to such detection some types of CD-audio players inhibit the readout of the program area PA of the disc. This is done because the read-out of the CD-I tracks in the program area would result in an undesired production of noise.

However the inhibition of the readout of the program area PA also means that the audio tracks on the disc, which in principle are readable by the CD-audio player, can not be played back by all types of CD-audio players.

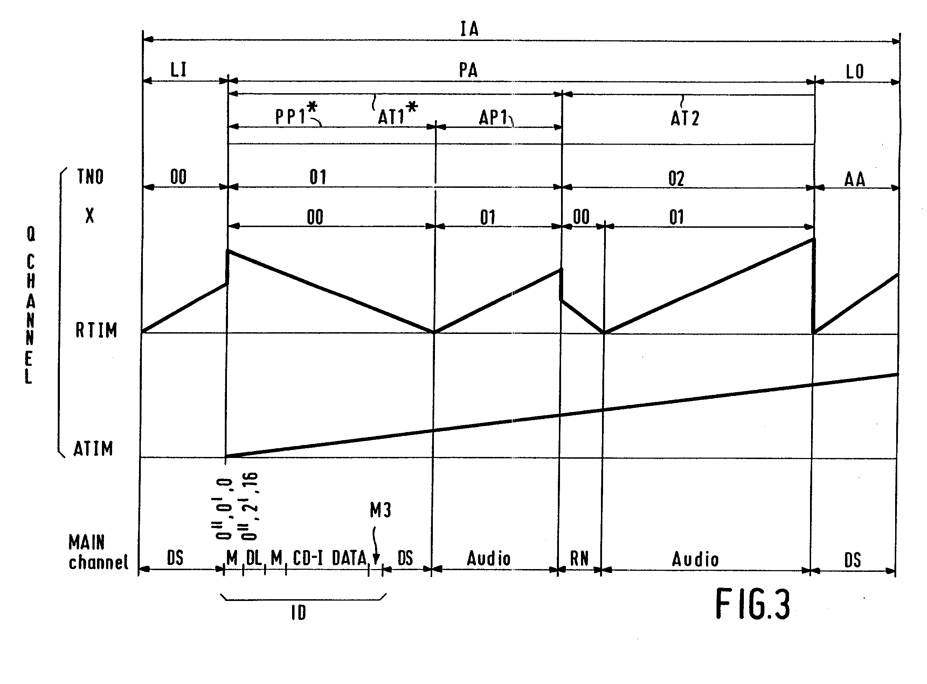

Figure 3 shows a lay-out of a disc according to the invention, which enables that a disc with both CD-I information and audio tracks can be read without problems by means of an usual CD-audio player. In the embodiment according to the invention the first track in the programm area PA is an audio track (AT1*) with an extended prepart (PP1*). The extended prepart PP1* comprises a part with digital silence DS which directly precedes the audio part AP1. The values of TNO, RTIM, X and ATIM are also indicated in the figure 3. Further it is preferred to set the so-called "control bit group" in the subcode Q-channel to a value (00XX) which corresponds with the setting as usual in a CD-audio disc. In the extended prepart (PP1*) the so-called subcode P-channel flag is set to "1". This channel flag is set to "0" at the start location of the audio part AP1. The digital silence is preceded by a part with additional information in the main channel which has been formatted as a CD-I track which includes a sequense of 2250 message sectors M3 at its end. The subcode Q channel of track ATT* includes information which has been formatted in accordance with the CD-audio standard.

The subcode Q channel in the lead-in area LI comprises a table of contents which has been formatted in accordance with the CD-audio standard. This means that the start locations of the audio parts of track ATT* and track AT2 are indicated in the table of contents TOC included in the lead-in area LI.

It is preferred that, with exception of the extended prepart (PP1*) the CD disc according to the invention has a format which is equal to a normal CD-audio disc without additional information in the prepart of the first track.

When a disc of according to the invention is loaded into an usual audio-disc player then the disc is handled as an usual CD-audio disc because the information in the lead-in area has been formatted in accordance with the CD-audio standard. For playing the first audio-track in the program area an usual CD-audio player performs a track jump to a part of the disc close before the start location of audio part which is indicated in the TOC.

In doing so the CD-I information in the prepart will be automatically skipped. The track jumps lands within the track part with digital silence located directly before the start location of the audio part.

A known feature of the present audio players is the so-called "Reverse Scan". When a user uses this feature this may result- in a passage of the start location of the audio part of the first track. In order to reduce the chance that this would result in a production of noise caused by the play of the additional information it is preferred that the length of the part with digital silence before the start location is substantial longer than the minimum length as prescribed by the CD-audio standard. This minimum length corresponds with two seconds of playing time. A length of the part with digital silence corresponds with at least thirty seconds of playing time suffices. However, a length of at least one hundred and twenty seconds is preferred.

Another solution to prevent the reproduction of noise caused by the play-back of CD-I information in the extended prepart (PP1*) is to provide an CD-audio player with means for inhibiting a jump into the part ID with the additional information in the extended prepart (PP1*). It is also possible to prevent the undesired production of noise by determining on the basis of the subcode information whether the part with the additional information is read out. This may be done on the base of the value of the TNO, X in combination of the value RTIM, e.g. in the event that TNO is equal to "1" and X is equal to "00" then the reproduction can be inhibited for values of RTIM which are greater than the minimum length of the digital silence recorded before the starting location of the audio part of the first track. Figure 6 shows by way of example an embodiment of a CD-audio player which is provided with means for preventing the reproduction of the additional information as audio information. The CD-audio player shown in figure 6 comprises a driving motor 60 for rotating a CD-disc 61 about an axis 62. An optical read head 63 of an usual type is located opposite to the rotating disc 61 for reading the information recorded on the disc 61. The read head supplies detection signals representing the information read from the disc to a signal processing unit 64 of an usual type. The signal processing unit recovers the information represented by the detection signals and separates the main information and the subcode information from one another. The main information is supplied to a main information processing unit 65, comprising a CIRC-encoder and EFM demodulator. The main signal processing unit 65 supplies a digital stereo audio signal to an output 66 via a muting circuit 67. The signal processing unit 64 supplies the subcode signal to a control unit 68. The control unit 68 may be for example of a program controlled type, which is loaded with a suitable program for determining on the basis of the subcode information whether the additional information is read by the reading head 63. As described hereinbefore this may be done on the basis of the values of TNO, X and RTIM. In the event that a read out of the additional information is detected the control unit 68 actuates the muting circuit 67 via a signal line 69, so as to bring the muting circuit 67 in a mode in which it blocks the passage of the digital stereo audio signal.

It is to be noted that it will be clear for the skilled man that other solutions exist for preventing the reproduction of noise caused by the read out of the additional information. As already mentioned in this application this can be done by inhibiting jumps into the track part with the additional information.

When a disc with a lay-out as described with reference to figure 3 is loaded in a CD-I player this player has to check whether CD-I information has been recorded on the disc. Since the table of contents in the lead-area of the disc corresponds with the format as prescribed by the CD-audio standard the table of contents does not include an indication that the disc is a CD-I disc. So the check on the type of the disc cannot be made on the basis of the indication usual available in the table of contents of the CD-I disc. However a CD-I-disc according to the invention can be simply distinguished from a CD-audio disc without additional information as will be explained below.

According to the CD-I standard a CD-part must be terminated with at least thirty seconds of Message sectors. This means that the prepart PP1* always exceeds a predetermined length corresponding with thirty seconds playing time. This property can be used in a CD-I player to distinguish a CD-I-disc with additional data in the prepart of the first audio track from an usual CD-audio disc without CD-I data.

On the basis of the information in the table of contents TOC it can be determined whether the audio part of the audio part of the first track has a start location is more than thirty seconds from the beginning of the programm area PA. If so, then the sectors reserved for the disc label can be read and on the basis of the contents of the disc label the presence of additional data in the prepart can be determined.

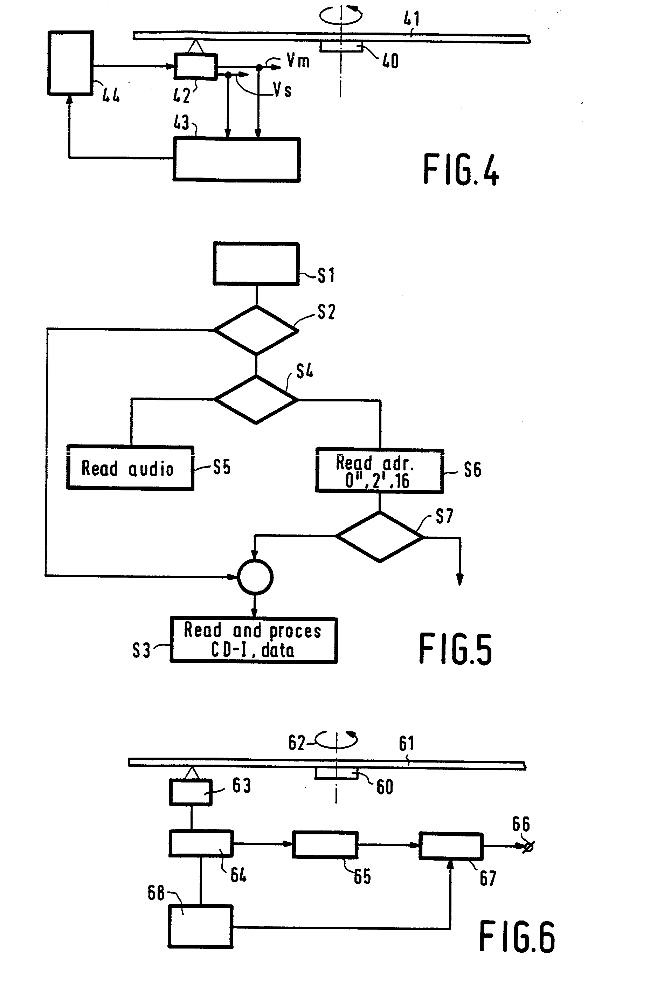

Figure 4 shows an embodiment of a player according to the invention with which a disc according to the invention can be distinguished from a CD-audio disc without additional information in the prepart of the first audio track.

The player comprises a driving motor 40 for rotating a Compact disc 41. The player comprises a read unit 42 of an usual type for reading the information recorded on the part of the disc 41 scanned by the read unit 42. The read unit 42 delivers a signal Vm which represents the information in the main channel of the information read and a signal Vs, which represents the information in the subcode Q channel of the information read. The signal Vs and Vm are supplied to a control unit 43. The player is further provided with a search unit 44. The search unit 44 is of an usual type which is arranged to perform under control of the control unit 43 track jumps to a part of the information specified by the control unit 43. The control unit 43 may be of a program controlled type loaded with a suitable program for controlling the track jumps. A flow diagram of an embodiment of such program is shown in figure 5.

This flow diagram comprises a first step S1. In this step the read unit is controlled to read the table of contents TOC recorded in the lead-in area LI. In step S2 it is determined whether the disc read is indicated as a CD-audio disc or as a CD-I disc. If a CD-I disc is detected step S2 is followed by step S3 in which the CD-I track is searched, read and processed. If a CD-audio disc is detected then step S4 is performed. In this step it is tested whether the absolute time code indicating the start location of the audio part of the first audio track indicated in the table of contents exceeds a predetermined value, e.g. thirty seconds. If not then step S5 is performed. In this step the audio tracks are searched and read. If in step S4 it is detected that the said absolute time code exceeds said predetermined value that step S6 is performed. In this step the sectors reserved for the disc label are read. In step S7 on the basis of the contents of this sectors it is checked whether the disc is a CD-I disc or not. If yes, then step S7 is followed by step S3, in which the CD-I data is searched read and processed.

It is remarked that in principle for the detection of the presence of a CD- disc according to the invention step S4 is not required. It is also possible to read the sectors reserved for the "disc label" after it is detected on basis of the table of contents that the concerning CD-disc is indicated as a CD-audio disc. If a "disc label" is present in these sectors, then the disc is no normal CD-audio disc. On the basis of the contents of the "disc label" it can be determined whether the disc is of a type which includes additional information in the extended prepart of the first track.

The embodiment described hereinbefore relates to CD-audio disc in which additional information such as CD-I information is recorded in the prepart of the first audio track. However it is to be noted that the invention is not limited to these embodiments. It is also possible to record the additional information in preparts of other audio tracks than the first track. Further it is possible to record other additional information than CD-I information in the prepart.

Finally it is remarked that the invention can also be used for other audio record carriers than CD-discs.

## Claims

1. Record carrier on which addressable information has been recorded, which information comprises at least one audio track (AT1), said audio track comprising a prepart (PP1) and an audio part (AP1), said prepart comprising pause (DS) information which when reproduced results in a reproduction of silence, which prepart (PP1) is located directly before the audio part (AP1), said audio part comprising audio information (DA) which when reproduced results in the reproduction of audio, on which record carrier a table of contents has been recorded, which table includes address information indicating the start location of the audio part (AP1) of said audio track (AT1), said information comprising additional non-audio information (ID), which is a different type of information than the pause information, characterized in that said prepart (PP1*) includes the additional information (ID) located before the pause information (DS).

2. Record carrier as claimed in claim 1, characterized in that a sequence of at least two audio tracks (ATT*, AT2) have been recorded on the record carrier, the additional information (ID) being included in the prepart (PP1*) of the first audio track (AT1*) of the sequence.

3. Record carrier as claimed in claim 1 or 2, characterized in that the record carrier is a compact disc (CD), on which the table of contents and the audio information is recorded in accordance with the CD-audio standard.

4. Record carrier as claimed in claim 3, characterized in that the length of the prepart (PPP*) with pause information is substantially longer than the minimum length as prescribed by the CD-audio standard.

5. Record carrier as claimed in claim 4, characterized in that said length of the prepart (PP1*) with pause information exceeds a length which corresponds with one hundred and twenty seconds of playing time.

6. Record carrier as claimed in any one of the claims 1 to 5, characterized in that the additional information (ID) comprises information which has been formatted in accordance with a CD-Interactive standard, which information comprises "disc label"-information (DL) at a predetermined address location (0",2',16) on the record carrier.

7. Record carrier as claimed in claim 6, characterized in that all information except the information in the prepart (PP1*) of the first track (AT1*) has a format which is identical to a CD-audio disc without additional information included in the prepart of the first track.

8. Player for playing a record carrier (41) as claimed in any one of the claims 1 to 7, which player is provided with a read unit (42) for reading information from the record carrier (41), a search unit (44) for performing track jumps under control of a control unit (43), which is arranged to cause a read out of the table of contents prior to the start of the playing of the audio tracks, to select on the basis of the table of contents a part of the information to be read by said reading means (42) and to cause that the search unit (44) performs a track jump to the selected part of the information, characterized in that the control unit (43) is arranged to detect on the basis of the information in the table of contents whether a prepart of an audio track exceeds a predetermined length and means (S3) for initiating a search to the additional information in the prepart in the event that the length of said prepart exceeds said predetermined length.

9. Player for playing a record carrier (41) as claimed in any one of the claims 6 or 7, which player is provided with a read unit (42) for reading information from the record carrier (41), a search unit (44) for performing track jumps under control of a control unit (43), which is arranged to cause a read out of the table of contents prior to the start of the playing of the audio tracks, to select on the basis of the table of contents a part of the information to be read by said reading means (42) and to cause that the search unit (44) performs a track jump to the selected part of the information, characterized in that the control unit (43) is arranged to detect on the basis of the information included in the table of contents and the information recorded at the location reserved for the "disc label"-information, whether a disc is a CD-disc with additional information in the prepart of the first audio track or a CD-disc without additional information in the prepart of the first audio track.

10. Audio player for playing a record carrier (61) as claimed in any one of the claims 1 to 7, which player is provided with a read unit (63,64) for reading information from the record carrier, with a search unit for performing track jumps under control of a control unit (68), with means (65) for supplying an audio signal representing the information read out to an audio signal output of the player, characterized in that the player is provided with means (67) for muting the audio signal in the event that the additional information is read or in that the control unit (68) is arranged for inhibiting track jumps to an area of the record carrier comprising the additional information.

## Patentansprüche

1. Aufzeichnungsträger, auf dem adressierbare Information aufgezeichnet worden ist, welche Information zumindest einen Audiotitel (AT1) umfaßt, wobei dieser Audiotitel einen Vorlaufabschnitt (PP1) und einen Audioabschnitt (AP1) umfaßt, der genannte Vorlaufabschnitt Pauseninformation (DS) umfaßt, die, wenn wiedergegeben, zu einer Wiedergabe von Stille führt, welcher Vorlaufabschnitt (PP1) unmittelbar vor dem Audioabschnitt (AP1) liegt, wobei dieser Audioabschnitt Audioinformation (DA) umfaßt, die, wenn wiedergegeben, zur einer Wiedergabe von Ton führt, auf welchem Aufzeichnungsträger ein Inhaltsverzeichnis aufgezeichnet worden ist, das Adresseninformation enthält, die die Anfangsposition des Audioabschnitts (AP1) des genannten Audiotitels (AT1) angibt, wobei diese Information zusätzliche Nicht-Audioinformation (ID) umfaßt, die eine andere Art der Information ist als die Pauseninformation, dadurch gekennzeichnet, daß der genannte Vorlaufabschnitt (PPP*) die vor der Pauseninformation (DS) liegende zusätzliche Information (ID) enthält.

2. Aufzeichnungsträger nach Anspruch 1, dadurch gekennzeichnet, daß eine Folge von zumindest zwei Audiotiteln (AT1*, AT2) auf dem Aufzeichnungsträger aufgezeichnet worden ist, wobei die zusätzliche Information (ID) in dem Vorlaufabschnitt (PP1*) des ersten Audiotitels (AT1*) der Folge enthalten ist.

3. Aufzeichnungsträger nach Anspruch 1 oder 2, dadurch gekennzeichnet, daß der Aufzeichnungsträger eine Compact Disc (CD) ist, auf der das Inhaltsverzeichnis und die Audioinformation gemäß dem CD-Audio-Standard aufgezeichnet worden sind.

4. Aufzeichnungsträger nach Anspruch 3, dadurch gekennzeichnet, daß die Lange des Vorlaufabschnitts (PP1*) mit Pauseninformation wesentlich größer ist als die vom CD-Audio-Standard vorgeschriebene minimale Länge.

5. Aufzeichnungsträger nach Anspruch 4, dadurch gekennzeichnet, daß die genannte Länge des Vorlaufabschnitts (PP1*) mit Pauseninformation eine Lange übersteigt, die einhundertundzwanzig Sekunden Abspielzeit entspricht.

6. Aufzeichnungsträger nach einem der Ansprüche 1 bis 5, dadurch gekennzeichnet, daß die zusätzliche Information (ID) Information umfaßt, die gemäß einem CD-Interactive-Standard formatiert worden ist, welche Information "Plattenetikett"-Information (DL) an einer vorgegebenen Adressenposition (0", 2', 16) auf dem Aufzeichnungsträger umfaßt.

7. Aufzeichnungsträger nach Anspruch 6, dadurch gekennzeichnet, daß alle Informationen außer der Information in dem Vorlaufabschnitt (PP1*) des ersten Titels (AT1*) ein Format haben, das mit dem einer CD-Audioplatte ohne in dem Vorlaufabschnitt des ersten Titels enthaltene zusätzliche Information identisch ist.

8. Spieler zum Abspielen eines Aufzeichnungsträgers (41) nach einem der Ansprüche 1 bis 7, welcher Spieler mit einer Leseeinheit (42) zum Auslesen von Information aus dem Aufzeichnungsträger (41) versehen ist sowie einer Sucheinheit (44) zum Ausführen von Spursprüngen unter der Steuerung einer Steuereinheit (43), die eingerichtet ist, ein Auslesen des Inhaltsverzeichnisses vor dem Beginn des Abspielens der Audiotitel zu bewirken, auf Basis des Inhaltsverzeichnisses einen Abschnitt der von den Lesemitteln (42) auszulesenden Information zu selektieren und dafür zu sorgen, daß die Sucheinheit (44) einen Spursprung zu dem selektierten Abschnitt der Information hin ausführt, dadurch gekennzeichnet, daß die Steuereinheit (43) eingerichtet ist, auf Basis der Information in dem Inhaltsverzeichnis festzustellen, ob ein Vorlaufabschnitt eines Audiotitels eine vorgegebene Länge übersteigt, und Mittel (S3) umfaßt zum Initiieren einer Suche nach der zusätzlichen Information in dem Vorlaufabschnitt in dem Fall, daß die Länge des genannten- Vorlaufabschnitts die genannte vorgegebene Länge übersteigt.

9. Spieler zum Abspielen eines Aufzeichnungsträgers (41) nach einem der Ansprüche 6 oder 7, welcher Spieler mit einer Leseeinheit zum Auslesen von Information aus dem Aufzeichnungsträger (41) versehen ist sowie einer Sucheinheit (44) zum Ausführen von Spursprüngen unter Steuerung einer Steuereinheit (43), die eingerichtet ist, ein Auslesen des Inhaltsverzeichnisses vor dem Beginn des Abspielens der Audiotitel zu bewirken, auf Basis des Inhaltsverzeichnisses einen Abschnitt der von diesen Lesemitteln (42) auszulesenden Information zu selektieren und dafür zu sorgen, daß die Sucheinheit (44) einen Spursprung zu dem selektierten Abschnitt der Information hin ausführt, dadurch gekennzeichnet, daß die Steuereinheit (43) eingerichtet ist, auf Basis der im Inhaltsverzeichnis enthaltenen Information und der an der für die "Plattenetikett"-Information reservierten Stelle aufgezeichneten Information festzustellen, ob eine Platte eine CD-Platte mit zusätzlicher Information in dem Vorlaufabschnitt des ersten Audiotitels oder eine CD-Platte ohne zusätzliche Information in dem Vorlaufabschnitt des ersten Audiotitels ist.

10. Audiospieler zum Abspielen eines Aufzeichnungsträgers (61) nach einem der Ansprüche 1 bis 7, welcher Spieler mit einer Leseeinheit (63, 64) zum Auslesen von Informationen aus dem Aufzeichnungsträger (41) sowie einer Sucheinheit zum Ausführen von Spursprüngen unter Steuerung einer Steuereinheit (68) versehen ist und mit Mitteln (65) zum Zuführen eines die ausgelesene Information repräsentierenden Audiosignals zu einem Audiosignalausgang des Spielers, dadurch gekennzeichnet, daß der Spieler mit Mitteln (67) versehen ist zum Stummschalten des Audiosignals in dem Fall, daß zusätzliche Information ausgelesen wird oder dadurch, daß die Steuereinheit (68) zum Verhindern von Spursprüngen zu einem die zusätzliche Information enthaltenden Gebiet des Aufzeichnungsträgers hin eingerichtet ist.

## Revendications

1. Support d'enregistrement sur lequel des informations adressables ont été enregistrées, lesquelles informations comprennent au moins une piste audio (AT1), ladite piste audio comprenant une partie préliminaire (PP1) et une partie audio (AP1), ladite partie préliminaire comprenant des informations de pause (DS) qui, lorsqu'elles sont reproduites, entraînent une reproduction de silence, laquelle partie préliminaire (PP1) est située juste avant la partie audio (AP1), ladite partie audio comprenant des informations audio (DA) qui, lorsqu'elles sont reproduites, entraînent la reproduction de sons, étant entendu que sur le support d'enregistrement a été enregistrée une table de matières, laquelle table comprend des informations d'adresses indiquant l'emplacement de début de la partie audio (AP1) de ladite piste audio (AT1), lesdites informations comprenant des informations non audio supplémentaires (ID), qui sont un type d'information différent des informations de pause, caractérisé en ce que ladite partie préliminaire (PP1*) comprend les informations supplémentaires (ID) placées devant les informations de pause (DS).

2. Support d'enregistrement suivant la revendication 1, caractérisé en ce qu'une séquence d'au moins deux pistes audio (AT1*, AT2) a été enregistrée sur le support d'enregistrement, les informations supplémentaires (ID) étant incluses dans la partie préliminaire (PP1*) de la première piste audio (AT1*) de la séquence.

3. Support d'enregistrement suivant la revendication 1 ou 2, caractérisé en ce qu'il comprend un disque compact (CD), sur lequel la table des matières et les informations audio sont enregistrées conformément à la norme des CD-audio.

4. Support d'enregistrement suivant la revendication 3, caractérisé en ce que la longueur de la partie préliminaire (PP1*) avec les informations de pause est sensiblement plus longue que la longueur minimum telle qu'elle est prescrite par la norme des CD-audio.

5. Support d'enregistrement suivant la revendication 4, caractérisé en ce que ladite longueur de la partie préliminaire (PP1*) avec les informations de pause dépasse une longueur qui correspond à cent vingt secondes de temps de lecture.

6. Support d'enregistrement suivant l'une quelconque des revendications 1 à 5, caractérisé en ce que les informations supplémentaires (ID) comprennent des informations qui ont été formatées conformément à une norme des CD interactifs, lesquelles informations comprennent les informations d'"étiquette de disque" (DL) à un emplacement d'adresse prédéterminé (0",2',16) sur le support d'enregistrement.

7. Support d'enregistrement suivant la revendication 6, caractérisé en ce que toute l'information sauf les informations contenues dans la partie préliminaire (PP1*) de la première piste (AT1*) a un format qui est identique à un disque CD-audio sans information supplémentaire incluse dans la partie préliminaire de la première piste.

8. Lecteur destiné à lire un support d'enregistrement (41) suivant l'une quelconque des revendications 1 à 7, lequel lecteur comporte une unité de lecture (42) destinée à lire des informations sur le support d'enregistrement (41), une unité de recherche (44) destinée à effectuer des sauts de piste sous la commande d'une unité de commande (43), qui est censée provoquer une extraction par lecture de la table des matières avant le début de la lecture des pistes audio, sélectionner sur la base de la table des matières une partie des informations à lire par ledit moyen de lecture (42) et amener l'unité de recherche (44) à effectuer un saut de piste vers la partie sélectionnée des informations, caractérisé en ce que l'unité de commande (43) est censée détecter sur la base des informations contenues dans la table des matières si une partie préliminaire d'une piste audio dépasse une longueur prédéterminée et un moyen (S3) destiné à amorcer une recherche des informations supplémentaires dans la partie préliminaire au cas où la longueur de ladite partie préliminaire dépasse ladite longueur prédéterminée.

9. Lecteur destiné à lire un support d'enregistrement (41) suivant l'une ou l'autre des revendications 6 et 7, lequel lecteur comporte une unité de lecture (42) destinée à lire des informations sur le support d'enregistrement (41), une unité de recherche (44) pour effectuer des sauts de piste sous la commande d'une unité de commande (43), qui est censée provoquer une extraction par lecture de la table des matières avant le début de la lecture des pistes audio, sélectionner sur la base de la table des matières une partie des informations à lire par ledit moyen de lecture (42) et amener l'unité de recherche (44) à effectuer un saut de piste vers la partie sélectionnée des informations, caractérisé en ce que l'unité de commande (43) est censée détecter sur la base des informations contenues dans la table des matières et des informations enregistrées à l'emplacement réservé pour les informations d'étiquette de disque", si un disque est un disque CD comportant des informations supplémentaires dans la partie préliminaire de la première piste audio ou un disque CD sans information supplémentaire dans la partie préliminaire de la première piste audio.

10. Lecteur audio destiné à lire un support d'enregistrement (61) suivant l'une quelconque des revendications 1 à 7, lequel lecteur comporte une unité de lecture (63, 64) destinée à lire des informations sur le support d'enregistrement, une unité de recherche destinée à effectuer des sauts de piste sous la commande d'une unité de commande (68), un moyen (65) pour délivrer un signal audio représentant les informations extraites par lecture à une sortie de signal audio du lecteur, caractérisé en ce que le lecteur comporte un moyen (67) destiné à rendre silencieux le signal audio au cas où les informations supplémentaires sont lues ou en ce que l'unité de commande (68) est destinée à empêcher des sauts de piste vers une zone du support d'enregistrement comprenant les informations supplémentaires.
